Europäisches Patentamt

European Patent Office

Office européen des brevets

(11) Publication number: **0 217 446 B1**

# EUROPEAN PATENT SPECIFICATION

(45) Date of publication of patent specification: **04.03.92**  (51) Int. Cl.⁵: **B01J 37/02**, C10G 49/02, B01D 53/36

(21) Application number: **86201577.3**

(22) Date of filing: **12.09.86**

The file contains technical information submitted after the application was filed and not included in this specification

(54) **Poly-metal-containing catalyst.**

(30) Priority: **04.10.85 GB 8524544**

(43) Date of publication of application:
**08.04.87 Bulletin 87/15**

(45) Publication of the grant of the patent:
**04.03.92 Bulletin 92/10**

(84) Designated Contracting States:
**AT BE CH DE FR GB IT LI NL SE**

(56) References cited:
FR-A- 1 592 666
FR-A- 2 427 844
US-A- 3 892 897
US-A- 4 490 483

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Boxhoorn, Gosse**
**Bashuisweg 3**
**NL-1031 CM Amsterdam(NL)**
Inventor: **Van Grinsven, Petrus Franciscus Antonius**
**Badhuisweg 3**
**NL-1031 CM Amsterdam(NL)**

Rank Xerox (UK) Business Services

## Description

The present invention relates to a process of preparing a poly-metal-containing catalyst comprising a carrier, in combination with titanium or zirconium or compounds thereof and at least one metal from group 5b, 6b, 7b, 1b or the non-noble group 8 metals of the Periodic Table of the Elements or compounds thereof.

The Periodic Table of the Elements as referred to herein is shown on page B-3 of "Handbook of Chemistry and Physics", 49th edition, 1968-1969. The group 5b metals are vanadium, niobium and tantalum; the group 6b metals are chromium, molybdenum and tungsten; the group 7b metals are manganese, technetium and rhenium; the non-noble group 8 metals are iron, cobalt and nickel, and the group 1b metals are copper, silver and gold.

Such poly-metal-containing catalysts are used for catalysing various reactions, such as reduction of sulphur oxides to sulphur, steam reforming, methanol oxidation, acidic acid production, oxidation of carbon monoxide, methanation and coal liquefaction.

Conventionally a poly-metal-containing catalyst is prepared by contacting a carrier with an impregnating solution comprising a compound of titanium or zirconium after which the carrier is dried and thermally treated, subsequently the carrier is further contacted with at least one impregnating solution comprising a compound of a metal from the group 5b, 6b, 7b, 1b or the non-noble group 8 metals of the Periodic Table of the Elements, and the carrier is dried and thermally treated to obtain the poly-metal-containing catalyst. Such a process will be referred to as a multi-step impregnation process.

It is known from US-A-3 892 897 to produce base metal titanate catalysts by contacting a refractory ceramic support structure with an acid-stabilized alcohol solution of a lower alkoxide of titanium and at least one other metal selected from the group consisting of Mn, Co, Fe, Cu, Al, and Cr and contacting said solution-coated support structure with an ammoniacal precipitating agent to produce a coating of the hydroxides of said titanium and other metals and heating said structure to 600-1200°C to convert the coating of hydroxides to a coating of oxides. In order to prevent untimely hydrolysis it is stated explicitly in US-A-3 892 897 that the process has to be carried out with alcohols rather than with water.

It is an object of the invention to provide a process of preparing a poly-metal-containing catalyst having a high specific area and low production costs.

To this end the process of preparing a poly-metal-containing catalyst according to the invention comprises the steps of:

(a)  contacting a carrier with an impregnating solution comprising a compound of a metal from group 5b, 6b, 7b, 1b or the non-noble group 8 metals of the Periodic Table of the Elements dissolved in an aqueous acidic solution of a compound of titanium or zirconium; subsequently

(b)  drying the carrier; and subsequently

(c)  subjecting the carrier to a heat-treatment at a temperature between 200°C and 800°C.

An advantage of the invention is that the metal dispersion and consequently the activity and the selectivity of the catalyst is improved. Furthermore it was found that when applying the process according to the invention to obtain a catalyst having a silicon-containing carrier the formation of substantially inactive hydrosilicates is prevented.

A further advantage is that a catalyst is obtained wherein there is a good interaction between the metals on the carrier. Moreover, the impregnating solution containing at least two metals was clear and stable.

In a suitable embodiment of the invention the pH of the acidic solution used is less than 5, more suitably the pH is less than 4.

The compound of titanium used can be a titanium halide, for example titanium tetra chloride, titanium tetra bromide or titanium tetra fluoride, an organic titanium salt, for example titanium oxalate, or ortho-titanic acid. The compound of zirconium used can be a zirconium hydroxide or a zirconium salt, for example zirconium nitrate, zirconyl chloride, or zirconium propylate.

Suitably the acidic solution of titanium or zirconium comprises 2-15% by mass of the metal titanium or zirconium. The impregnating solution can comprise 2-15% by mass of a metal from the group 5b, 6b, 7b, 1b or the non-noble group 8 metals of the Periodic Table of the Elements.

To prepare a poly-metal-containing catalyst comprising three or more metals or compound(s) of metals, the impregnating solution used can further comprise an additional compound of a metal from group 5b, 6b, 7b, 1b or the non-noble group 8 metals of the Periodic Table of the Elements.

This result can also be obtained when step (a) is either preceded by or followed by contacting the carrier with an impregnating solution comprising a compound of a metal from group 5b, 6b, 7b, 1b or the non-noble group 8 metals of the Periodic Table of the Elements.

The compound present in the impregnating solution of a metal of group 5b, 6b, 7b, 1b or the non-noble group 8 metals of the Periodic Table of the Elements can be a salt, an oxide or a hydroxide of said metal which dissolves in an acidic solution; suitably a salt of the metal is used.

Carriers for the poly-metal-containing catalyst according to the invention can suitably comprise silicon oxide, titanium oxide, zirconium oxide, aluminium oxide, silicon carbide or mixtures thereof.

Suitably the catalyst can be reduced at a high temperature between 500 °C and 1000 °C.

To increase the activity of the catalyst a bromine compound may be applied to the treated carrier and subsequently the carrier is dried. The bromine compound may suitably be HBr or $NH_4Br$.

The process according to the present invention is suitable for preparing a poly-metal-containing catalyst comprising a carrier in combination with titanium or zirconium or compounds thereof and at least one metal selected from the group vanadium, chromium, molybdenum, tungsten, manganese, iron, nickel, platinum and copper or compounds thereof.

Catalysts prepared according to the invention comprising titanium or zirconium in combination with nickel and molybdenum, or with cobalt and molybdenum, or with nickel and tungsten, or with nickel and vanadium can suitably be used for hydroprocessing, such as hydrodesulphurization, hydrodemetallization, hydrocracking or residue conversion.

Catalysts prepared according to the invention containing titanium or zirconium and vanadium can suitably be used for the reduction of nitrogen oxides such as nitrogen oxide and nitrogen dioxide. The reduction process comprises contacting a gaseous mixture containing nitrogen oxides at atmospheric pressure, at a temperature between 150 °C and 350 °C and a gas hourly space velocity between 4 000 and 10 000 $Nm^3/m^3$/hour (1 $Nm^3$ gas equals 1 $m^3$ at 20 °C and 0.1 MPa), wherein the molar ratio of $NH_3$ to nitrogen oxides is slightly below the stoicheometrically required ratio. Suitably the amount of titanium or zirconium is in the range of 3 to 7% by mass and the amount of vanadium is in the range of 5 to 15% by mass.

The invention will now be described by way of example in more detail with reference to the examples.

Unless otherwise specified, the silicon oxide carriers are carriers (ex Shell) having a particle diameter of 1.5 mm, a pore volume $H_2O$ of about 0.9 ml/g and a specific area determined using the BET method of 260 $m^2$/g. Furthermore the acidic solution of $TiCl_4/H_2O$ used is manufactured by Tilcom, the solution has a pH of 0, has a density of 1.33 g/ml and it contains 9% by mass Ti. The acidic solution of $TiCl_4/H_2O$ can also be prepared by slowly adding $TiCl_4$ to $H_2O$.

Example 1

To illustrate the metal dispersion of a bimetallic catalyst containing titanium and cobalt on silicon oxide, catalyst samples 1A and 1B were prepared. The metal dispersion was determined using X-ray photo electron spectroscopy (XPS), and the results of the determination have been included in Table 1.

Catalyst sample 1A was prepared not according to the invention as follows. At first 351.7 g of silicon oxide carrier was contacted with 415 ml of an aqueous solution containing 180 ml of an acidic solution of $TiCl_4/H_2O$, and the carrier was rotated for 1 hour. Subsequently the carrier was dried at 120 °C for 24 hours, and treated in air by increasing the temperature in 1 hour to 450 °C followed by maintaining the temperature at 450 °C for 1 hour. Thereupon, 85 g of the carrier coated with $TiO_2$ was impregnated with an impregnating solution comprising 21.9 ml of an aqueous solution of $Co(NO_3)_2.6H_2O$ containing 447 g Co diluted with 47.7 ml $H_2O$, and the carriers were rotated for 1 hour. Subsequently the carrier was dried while being rotated for 1.5 hours, dried for 8 hours at 120 °C, and treated in air by increasing the temperature in 1 hour to 450 °C followed by maintaining the temperature at 450 °C for 1 hour to obtain catalyst sample 1A. Catalyst sample 1A contained 4.86% by mass titanium and 6.07% by mass cobalt, and had a specific area of 199 $m^2$/g.

Catalyst sample 1B was prepared according to the invention as follows. To prepare an impregnating solution, 23.2 ml of an aqueous solution of $Co(NO_3)_2.6H_2O$ containing 4.72 g Co was dissolved in 45.9 ml of an acidic solution of $TiCl_4/H_2O$. The obtained impregnating solution, which was clear and stable, was diluted with 18.1 ml $H_2O$. Thereupon 85 g of silicon oxide carrier was contacted with 87.2 ml of the impregnating solution. The carrier was dried for 1.5 hours, dried while being rotated during 8 hours at 120 °C, and treated in air by increasing the temperature in 1 hour to 450 °C followed by maintaining the temperature for 1 hour at 450 °C. Catalyst sample 1B contained 5.49% by mass titanium and 4.06% by mass cobalt, and had a specific area of 215 $m^2$/g.

TABLE 1

| Catalyst sample | Specific area m$^2$/g | XPS atomic ratio | |
|---|---|---|---|
| | | Ti/Si | Co/Si |
| 1A | 199 | 0.023 | 0.013 |
| 1B | 215 | 0.040 | 0.019 |

From Table 1 it can be concluded that an increased metal dispersion is obtained by preparing the catalyst according to the invention (catalyst sample 1B), and that the specific area of the catalyst prepared according to the invention is higher than the specific area of the catalyst prepared not according to the invention.

Example 2

To illustrate the metal dispersion of a poly-metal-containing catalyst containing titanium, molybdenum and cobalt on silicon oxide, three catalyst samples, 2A, 2B and 2C, were prepared. The metal dispersion was determined using X-ray photo electron spectroscopy (XPS) and the results of the determination have been included in Table 2.

Catalyst sample 2A was prepared not according to the invention as follows. At first 351.7 g of silicon oxide carrier was contacted with 415 ml of a solution of TiCl$_4$/H$_2$O, and the carrier was rotated for an hour. Subsequently the impregnated carrier was dried at 120 $^\circ$C for 24 hours, and treated in air by increasing the temperature in 1 hour to 450 $^\circ$C followed by maintaining the temperature at 450 $^\circ$C for 1 hour.

Thereupon, 100.3 g of the Ti-containing carrier was contacted with an aqueous solution comprising 18.82 g (NH$_4$)$_2$Mo$_2$O$_7$ dissolved in 53.2 g NH$_4$OH (24% NH$_3$) and 21.5 g H$_2$O, and the carrier was rotated for 1 hour. The impregnated carrier was dried while being rotated for 1 hour, and treated in air by increasing the temperature in 1 hour to 450 $^\circ$C followed by maintaining the temperature for 1 hour at 450 $^\circ$C.

Subsequently 85 g of the carrier was contacted with 13.8 ml of an aqueous solution of Co(NO$_3$)$_2$ containing 2.81 g Co, and the carrier was rotated for 1 hour. The carrier was dried while being rotated for 1 hour, and thermally treated by increasing the temperature in 1 hour to 450 $^\circ$C followed by maintaining the temperature for 1 hour at 450 $^\circ$C. Catalyst sample 2A so obtained contained 4.39% by mass titanium, 8.59% by mass molybdenum and 3.11% by mass cobalt, and had a specific area of 132 m$^2$/g.

Catalyst sample 2B was prepared according to the invention as follows. To prepare an impregnating solution, 18.89 g of an aqueous solution of Co(NO$_3$)$_2$.6H$_2$O containing 2.57 g Co was dissolved in 77.97 g of an acidic solution of TiCl$_4$/H$_2$O, which solution was heated to 30 $^\circ$C and diluted with 5 ml H$_2$O. The obtained impregnating solution was clear and stable. With this solution 85 g of silicon oxide carrier was contacted, and the carrier was rotated for 1 hour. Subsequently the carrier was dried while being rotated for 2.5 hours, dried at 120 $^\circ$C for 18 hours, and treated in air by increasing the temperature in 1 hour to 450 $^\circ$C followed by maintaining the temperature at 450 $^\circ$C for 1 hour.

The treated carrier was further contacted with an impregnating solution comprising 17.93 g (NH$_4$)$_2$Mo$_2$O$_7$ and 40 ml of an aqueous NH$_4$OH solution, containing 24% by mass NH$_3$, and the carrier was rotated for 1 hour. Subsequently the carrier was dried for 2.5 hours while being rotated, dried for 8 hours at 120 $^\circ$C, and treated in air by increasing the temperature to 450 $^\circ$C in 1 hour followed by maintaining the temperature for 1 hour at 450 $^\circ$C. Catalyst sample 2B so obtained contained 5.70% by mass titanium, 10.0% by mass molybdenum and 2.81% by mass of cobalt, and had a specific area of 147 m$^2$/g.

Catalyst sample 2C was prepared according to the invention as follows. To 28.61 g MoCl$_5$ was added in 1 hour 69.2 g of an acidic solution of TiCl$_4$/H$_2$O, it was observed that some gaseous HCl was formed. To this solution was added 15 g H$_2$O and subsequently 7.36 g CoCl$_2$. The obtained impregnation solution remained clear and stable. With this impregnating solution 85 g silicon oxide carrier was contacted, and the carrier was rotated for 1 hour. Subsequently the carrier was dried while being rotated, dried at 120 $^\circ$C for 8 hours, and treated in air by increasing the temperature in 1 hour to 450 $^\circ$C followed by maintaining the temperature at 450 $^\circ$C. Catalyst sample 2C so obtained contained 5.13% by mass titanium, 8.34% by mass molybdenum and 2.66% by mass cobalt.

4

TABLE 2

| Catalyst sample | Specific area m$^2$/g | Metal dispersion in molar ratio | | |
|---|---|---|---|---|
| | | Ti/Si | Mo/Si | Co/Si |
| 2A | 132 | 0.010 | 0.042 | 0.006 |
| 2B | 147 | 0.029 | 0.047 | 0.019 |

From Table 2 it can be concluded that an increased metal dispersion is obtained by preparing the catalyst according to the invention, and that the specific area of the catalyst prepared according to the invention is larger than that of the catalyst not prepared according to the invention.

A visual appreciation of the catalyst samples showed that the metal dispersion of catalyst sample 2C was similar to the metal dispersion of catalyst sample 2B.

Catalysts prepared according to the invention comprising titanium, molybdenum and cobalt can suitably be used for hydrodesulphurization, hydrocracking and residue conversion.

Example 3

Two poly-metal-containing catalyst samples, 3A and 3B, containing titanium, nickel and molybdenum were prepared according to the invention.

Catalyst sample 3A was prepared as follows. To prepare an impregnating solution, 18.75 g Ni(NO$_3$)$_2$.6H$_2$O was dissolved in 77.16 g of an acidic solution of TiCl$_4$/H$_2$O, and a clear and stable solution was obtained. Thereupon 85 g of silicon oxide carrier was contacted with this impregnating solution, and the carrier was rotated for 1 hour. The carrier was dried for 2.5 hours while being rotated, dried for 18 hours at 120 °C, and treated in air by increasing the temperature in 1 hour to 450 °C followed by maintaining the temperature at 450 °C for 1 hour.

The treated carrier was further contacted with a solution containing 16.8 g (NH$_4$)$_2$Mo$_2$O$_7$ and 53 ml NH$_4$OH containing 24% by mass NH$_3$, and the carrier was rotated for 1 hour. The carrier was dried for 2.5 hours while being rotated, dried for 8 hours at 120 °C, and treated in air by increasing the temperature in 1 hour to 450 °C followed by maintaining the temperature at 450 °C for 1 hour. Catalyst sample 3A so obtained contained 5.80% by mass titanium, 8.5% by mass molybdenum and 2.92% by mass nickel.

Catalyst sample 3B was prepared as follows. To prepare an impregnating solution, 76.5 g of an acidic solution of TiCl$_4$/H$_2$O was mixed with 18.75 g Ni(NO$_3$)$_2$.6H$_2$O to form a solution of 65 ml. Subsequently 30.67 g MoCl$_5$ and 5 ml H$_2$O were added thereto, and a clear and stable impregnating solution was obtained. Thereupon 85 g of silicon oxide carrier was contacted with this impregnating solution, and the carrier was rotated for 1 hour. The carrier was dried for 1.5 hours while being rotated, dried 8 hours at 120 °C, and treated in air by increasing the temperature in 1 hour to 450 °C followed by maintaining the temperature at 450 °C for 1 hour. Catalyst sample 3B so obtained contained 6.0% by mass titanium, 9.1% by mass molybdenum and 3.2% by mass nickel.

A visual appreciation of catalyst samples 3A and 3B showed a good metal dispersion.

Catalysts prepared according to the invention comprising titanium, molybdenum and nickel can suitably be used for hydrodesulphurization, hydrocracking and residue conversion.

Example 4

This example shows an alternative process of preparing a poly-metal-containing catalyst according to the invention containing titanium, molybdenum and cobalt on silicon oxide, wherein, in contrast to the method of preparing catalyst sample 2B, the carrier is first contacted with an impregnating solution containing titanium and molybdenum and thereafter with an impregnating solution containing cobalt.

Catalyst sample 4 was prepared according to the invention as follows. To prepare an impregnating solution, 33.66 g MoCl$_5$ was dissolved in 59.4 ml of an acidic solution of TiCl$_4$/H$_2$O. The obtained impregnating solution was clear and stable. With this impregnating solution 100 g of silicon oxide carrier was contacted, and the carrier was rotated for 1 hour. Subsequently the carrier was dried while being rotated for 1 hour, dried for 8 hours at 120 °C, and treated in air by increasing the temperature in 1 hour to 450 °C followed by maintaining the temperature for 1 hour at 450 °C.

Thereupon 85 g of the treated carrier was contacted with an aqueous impregnating solution containing 7.39 g CoCl$_2$ dissolved in 55.1 g H$_2$O, and the carrier was rotated for 1 hour. The carrier was dried while being rotated for 1 hour, dried for 8 hours at 120 °C, and treated in air by increasing the temperature in 1 hour to 450 °C followed by maintaining the temperature for 1 hour at 450 °C. Catalyst sample 4 so obtained contained 4.95% by mass titanium, 9.52% by mass molybdenum, and 3.62% by mass cobalt.

A visual appreciation of catalyst sample 4 showed a good metal dispersion.

Example 5

Three catalyst samples containing titanium and copper on silicon oxide, titanium and manganese on silicon oxide and titanium and iron on silicon oxide, respectively, were prepared according to the invention as follows.

Catalyst sample 5A containing titanium and copper on silicon oxide was prepared as follows. To prepare an impregnating solution 19.3 g $Cu(NO_3).3H_2O$ was dissolved in 49.4 ml of an acidic solution of $TiCl_4/H_2O$. Upon heating the mixture to about 40 °C a clear solution was obtained, which remained clear and stable after cooling to room temperature. Subsequently 85 g of silicon oxide carrier was contacted with 60 ml of the impregnating solution, and the carrier was rotated for 1 hour. Thereafter the carrier was dried while being rotated for 2.5 hours, dried for 11 hours at 120 °C, and treated in air by raising the temperature in 1 hour to 450 °C followed by maintaining the temperature at 450 °C for 1 hour. Catalyst sample 5A contained 6.4% by mass titanium and 5.6% by mass copper.

A visual appreciation of catalyst sample 5A showed a good metal dispersion.

Catalyst sample 5B containing titanium and manganese was prepared as follows. To prepare an impregnating solution 24.3 g $Mn(NO_3).4H_2O$ was dissolved in 51.8 ml of an acidic solution of $TiCl_4/H_2O$, and a clear and stable solution was obtained. Subsequently 85 g of silicon oxide carrier was contacted with 65 ml of the impregnating solution, and the carrier was rotated for 1 hour. Thereafter the carrier was dried while being rotated for 2.5 hours, dried at 120 °C for 9 hours, and treated in air by raising the temperature in 1 hour to 450 °C followed by maintaining the temperature at 450 °C for 1 hour. Catalyst sample 5B contained 6.1% by mass titanium and 4.6% by mass manganese.

A visual appreciation of catalyst sample 5B showed a good metal dispersion.

Catalysts comprising titanium and manganese can suitably be used for the oxidation of organic substances for example seawage.

Catalyst sample 5C containing titanium and iron was prepared as follows. To prepare an impregnating solution 37.11 g $Fe(NO_3)_3.9H_2O$ was dissolved in 66.91 g of an acidic solution of $TiCl_4/H_2O$, and a clear and stable solution was obtained after cooling to room temperature. Subsequently 85 g of silicon oxide carriers was impregnated with 64 ml of the impregnating solution, and the carriers were rotated. Thereafter the carriers were dried while being rotated for 2.5 hours, dried at 120 °C for 8 hours, and treated in air by raising the temperature at 450 °C for 1 hour. Catalyst sample 5C contained 5.7% by mass titanium and 4.7% by mass iron.

A visual appreciation of catalyst sample 5C showed a good metal dispersion.

Catalysts prepared according to the invention comprising titanium and iron can suitably be used as oxidation catalysts.

Example 6

A catalyst sample containing zirconium and vanadium on silicon oxide was prepared according to the invention as follows. To prepare an impregnating solution 38.35 g $VOCl_3$ was dissolved in 19.91 g of an acidic solution of $ZrOCl_2.8H_2O$, and an amount of water was added to obtain a volume of 66 ml. A clear and stable impregnation solution was obtained. With this solution 85 g of silicon oxide carrier was contacted, and the carrier was rotated for 1 hour. Subsequently the carrier was dried for 2.5 hours while being rotated, then dried for 8 hours at 120 °C, and treated in air by increasing the temperature in 1 hour to 450 °C followed by maintaining the temperature for 1 hour at 450 °C. Catalyst sample 6 so obtained contained 4.5% zirconium and 9.4% vanadium.

A visual appreciation of the catalyst sample 6 showed a good metal dispersion.

Catalysts prepared according to the invention comprising zirconium and vanadium can suitably be used for the reduction of nitrogen oxides.

Example 7

To show the capacity of poly-metal-containing catalysts comprising titanium and vanadium to catalyse the reduction of nitrogen oxides in the presence of ammonia, catalyst samples 7A, 7B, 7C and 7D were prepared according to the invention. For the nitrogen oxide conversion, the performance of these catalyst samples was compared with the performance of catalyst samples 7E and 7F prepared in a conventional manner. In Table 3 the NO conversion performance of catalyst sample 8 prepared according to the invention has been included as well.

Catalyst sample 7A was prepared according to the invention as follows. At first an impregnating solution was prepared by dissolving 10 ml $VOCl_3$ in 42 ml of an acidic solution of $TiCl_4/H_2O$ in 0.5 hour and adding thereto 24 ml $H_2O$. A clear and stable impregnating solution was obtained. Thereupon 85 g of silicon oxide carrier was contacted with 61.5 ml of this impregnating solution, and the carrier was rotated for 1 hour. The carrier was dried for 3 hours while being rotated, then dried for 8 hours at 120 °C, and treated in air by increasing the temperature in 1 hour to 450 °C followed by maintaining the temperature for 1 hour at 450 °C. Catalyst sample 7A so obtained contained 4.96% by mass titanium and 5.06% by mass vanadium, and the specific area of the catalyst sample was 193 $m^2/g$.

Catalyst samples 7B and 7C were prepared according to the invention in the same manner as catalyst sample 7A, however the impregnating solutions used contained different amounts of titanium and vanadium, so as to obtain catalyst sample 7B containing 4.4% by mass titanium and 9.4% by mass vanadium and catalyst sample 7C containing 3.1% by mass titanium and 10.1% by mass vanadium. The specific area of the catalyst sample 7B was 185 $m^2/g$ and that of catalyst sample 7C 179 $m^2/g$.

Catalyst sample 7D was prepared according to the invention as follows. In 57.17 g of an acidic solution of $TiCl_4/H_2O$ was added 10.35 g $(NH_4)_2O.V_2O_5$. The solution was kept for 2 hours at a temperature between 55 and 58 °C. Subsequently the solution was diluted to 76 ml by adding an aqueous solution of HCl containing 18% by mass HCl. Thereupon 85 g of silicon oxide carrier was contacted with 75 ml of this solution, and the carrier was rotated for 1 hour. The carrier was dried for 1.5 hours while being rotated, thereupon the temperature was raised in 1 hour to 120 °C and maintained at 120 °C for 8 hours. Subsequently the carrier was treated in air by increasing the temperature in 1 hour to 450 °C followed by maintaining the temperature at 450 °C for 1 hour. Thereafter a bromine compound was applied on the carrier as follows. The carrier was contacted with 67.5 ml of an aqueous solution containing 2.5 g $NH_4Br$, rotated for 1 hour, dried for 1.5 hours while being rotated and dried for 17 hours at 120 °C. Catalyst sample 7D so obtained contained 4.84% by mass titanium and 4.92% by mass vanadium, and the specific area of the catalyst sample was 189 $m^2/g$.

Catalyst sample 7E was prepared not according to the invention as follows. At first 700 g of silicon oxide carrier was contacted with an impregnating solution containing 361 ml $TiCl_4/H_2O$ and 424 ml $H_2O$ and the carrier was rotated for 1 hour. Thereupon the carrier was dried while being rotated for 2.5 hours, then dried for 2 hours at 120 °C, and thermally treated by increasing the temperature in 1 hour to 450 °C. Subsequently 85 g of the treated carrier was impregnated with 69.5 ml of an aqueous solution containing 8.78 g $(NH_4)_2O.V_2O_5$ dissolved in 21 ml $H_2O$ at 80 °C, to which 21 g $H_2C_2O_4$ was added, and water to a volume of 69.5 ml, and the carrier was rotated for 1 hour. Subsequently the carrier was dried while being rotated for 1.5 hours, then dried for 8 hours at 120 °C, and treated in air by increasing the temperature in 1 hour to 450 °C followed by maintaining the temperature for 1 hour at 450 °C. Catalyst sample 7E so obtained contained 5.10% by mass titanium and 4.86% by mass vanadium, and had a specific area of 194 $m^2/g$.

Catalyst sample 7F was prepared not according to the invention in the same manner as catalyst sample 7E, however the impregnating solution used contained so much vanadium that catalyst sample 7F contained 9.5% by mass vanadium and 4.91% by mass titanium.

To study the activity of the catalysts, a sample thereof was arranged in a reactor having a volume of 60 ml and gas having a predetermined temperature was supplied at atmospheric pressure to the reactor at a predetermined rate. The composition of the effluents leaving the reactor was determined with a Thermo Electron model 10A analyser.

The composition of the feed gas used to study nitrogen oxide reduction was 5% by volume $O_2$, 13% by volume $CO_2$, 6% by volume $H_2O$, 400-2 500 ppmv NO, and 400-5 000 ppmv $NH_3$, the remainder being nitrogen, and the ratio of $NH_3$ to NO being between 0.8-2. The rate of the gas supplied to the reactor resulted in a gas hourly space velocity of 4 000 $Nm^3/m^3/hour$, wherein 1 $Nm^3$ gas equals 1 $m^3$ gas at 20 °C and 0.1 MPa.

The results of the tests have been included in Table 3. Please note that the temperature is determined at the downstream end of the reactor. The conversion is defined as the ratio of the difference of the NO concentrations in the feed gas and in the effluents to the NO concentration in the feed gas times 100%.

7

EP 0 217 446 B1

TABLE 3

| NO-conversion | | | | | |
|---|---|---|---|---|---|
| Catalyst Sample | Mass % | | Temperature °C | NO in ppmv | Conversion % |
| | Ti | V | | | |
| 7A | 5 | 5 | 150 | 425 | 84 |
| 7A | 5 | 5 | 198 | 435 | 99 |
| 7B | 4 | 9 | 150 | 420 | 85 |
| 7B | 4 | 9 | 199 | 420 | 99 |
| 7C | 3 | 10 | 151 | 490 | 87 |
| 7C | 3 | 10 | 200 | 370 | 99 |
| 7D | 5 | 5 | 150 | 400 | 92 |
| 7E | 5 | 5 | 149 | 412 | 51 |
| 7E | 5 | 5 | 203 | 440 | 94 |
| 7F | 5 | 10 | 150 | 530 | 65 |
| 7F | 5 | 10 | 199 | 575 | 96 |
| 8 | 5 | 5 | 151 | 430 | 80 |
| 8 | 5 | 5 | 200 | 430 | 99 |

The composition of the feed gas used to study the reduction of nitrogen dioxide was 6% by volume $H_2O$, 500-5 000 ppmv $NO_2$ and 500-10 000 ppmv $NH_3$, the remainder being air. The ratio of the concentration of $NH_3$ to $NO_2$ in the feed gas is between 0.8 and 2. The rate of the gas supplied to the reactor resulted in a gas hourly space velocity of 4 000 $Nm^3/m^3$/hour. The results of the tests have been included in Table 4. The temperature is determined at the downstream end of the reactor. The conversion is defined as the ratio of the difference of the $NO_2$ concentrations in the feed gas and in the effluents to the $NO_2$ concentration in the feed gas times 100%.

TABLE 4

| $NO_2$-conversion | | | | | |
|---|---|---|---|---|---|
| Catalyst Sample | Mass % | | Temperature °C | $NO_2$ in ppmv | Conversion % |
| | Ti | V | | | |
| 7A | 5 | 5 | 198 | 910 | 79 |
| 7A | 5 | 5 | 249 | 910 | 87 |
| 7B | 4 | 9 | 203 | 1025 | 72 |
| 7C | 3 | 10 | 253 | 1050 | 73 |

Example 8

This Example shows a method of preparing a poly-metal-containing catalyst containing titanium and vanadium on silicon oxide according to the invention, wherein the acidity of the impregnating solution has been increased by adding acid thereto.

The impregnating solution was prepared as follows. To 55.87 g of an acidic solution of $TiCl_4/H_2O$ was added 10.12 g $(NH_4)_2O.V_2O_5$, the mixture was heated to 55 °C and the temperature was maintained for 1.5 hours at 55 °C. Subsequently heating was interrupted and a solution of 24 ml HCl (18% by mass) was added in 2 minutes and the temperature dropped to 48 °C. For about 0.5 hour the solution was maintained at 50 °C while being stirred, and a volume of 69 ml of a clear darkbrown solution was obtained. The solution was diluted with 8 ml of an aqueous solution of HCl containing 18% by mass HCl. Thereupon 85 g of silicon oxide carrier was contacted with 69 ml of the impregnating solution, and the carrier was rotated for 1 hour. The impregnated carrier was dried while being rotated for 1.5 hours, dried for 8 hours at 120 °C, and treated in air by increasing the temperature in 1 hour to 450 °C followed by maintaining the temperature for 1 hour at 450 °C. Catalyst sample 8 contained 5% by mass titanium and 5% by mass

8

vanadium.

A visual appreciation of catalyst sample 8 showed a good metal dispersion.

The NO conversion data for this catalyst sample have been included in Table 3.

## Claims

1. Process of preparing a poly-metal-containing catalyst comprising the steps of :
   (a) contacting a carrier with an impregnating solution comprising a compound of a metal from Group 5b, 6b, 7b, 1b or the non-noble Group 8 metals of the Periodic Table of the Elements dissolved in an aqueous acidic solution of a compound of titanium or zirconium ; subsequently
   (b) drying the carrier ; and subsequently
   (c) subjecting the carrier to a heat-treatment at a temperature between 200 °C and 800 °C.

2. Process as claimed in claim 1, wherein the pH of the acidic solution used is less than 5.

3. Process as claimed in claim 1 or 2, wherein the titanium compound used is a titanium halide, an organic titanium salt or ortho-titanic acid.

4. Process as claimed in claim 1 or 2, wherein the zirconium compound used is a zirconium salt or zirconium hydroxide.

5. Process as claimed in anyone of the claims 1-4, wherein the impregnating solution used further comprises an additional compound of a metal from group 5b, 6b, 7b, 1b or the non-noble group 8 metals of the Periodic Table of the Elements.

6. Process as claimed in any one of the claims 1-5, wherein step (a) is preceded by or followed by contacting the carrier with an impregnating solution comprising a compound of a metal from group 5b, 6b, 7b, 1b or the non-noble group 8 metals of the Periodic Table of the Elements.

7. Process as claimed in any one of the claims 1-6, further comprising applying a bromine compound to the treated carrier obtained in step c) and drying the carrier.

8. Use of a catalyst prepared according to any one of the claims 1-7 for hydroprocessing.

9. Use of a catalyst prepared according to any one of the claims 1-7 for the reduction of nitrogen oxides.

10. Use of a catalyst prepared according to any one of the claims 1-6 for the reduction of nitrogen oxides, wherein the catalyst comprises a carrier contacted with a solution of a compound of titanium or zirconium and a compound of vanadium.

## Revendications

1. Procédé de préparation d'un catalyseur contenant plusieurs métaux, comprenant les étapes qui consistent à :
   (a) mettre en contact un support avec une solution d'imprégnation comprenant un composé d'un métal du groupe VB, VIB, VIIB, IB ou des métaux non nobles du groupe VIII de la classification périodique des éléments, dissous dans une solution aqueuse acide d'un composé de titane ou de zirconium; puis
   (b) sécher le support; puis
   (c) soumettre le support à un traitement thermique, à une température comprise entre 200 °C et 800 °C.

2. Procédé selon la revendication 1, dans lequel le pH de la solution acide utilisée est inférieur à 5.

3. Procédé selon la revendication 1 ou 2, dans lequel le composé de titane utilisé est un halogénure de titane, un sel de titane organique ou l'acide ortho-titanique.

9

EP 0 217 446 B1

**4.** Procédé selon la revendication 1 ou 2, dans lequel le composé de zirconium utilisé est un sel de zirconium ou l'hydroxyde de zirconium.

**5.** Procédé selon l'une quelconque des revendications 1-4, dans lequel la solution d'imprégnation utilisée comprend, en outre, un composé supplémentaire d'un métal du groupe VB, VIB, VIIB, IB ou des métaux non nobles du groupe VIII de la classification périodique des éléments.

**6.** Procédé selon l'une quelconque des revendications 1-5, dans lequel l'étape (a) est précédée ou suivie d'une mise en contact du support avec une solution d'imprégnation comprenant un composé d'un métal du groupe VB, VIB, VIIB, IB ou des métaux non nobles du groupe VIII de la classification périodique des éléments.

**7.** Procédé selon l'une quelconque des revendications 1-6, comprenant, en outre, l'application d'un composé de brome sur le support traité obtenu dans l'étape (c) et le séchage du support.

**8.** Utilisation d'un catalyseur préparé selon l'une quelconque des revendications 1-7 pour l'hydrotraitement.

**9.** Utilisation d'un catalyseur préparé selon l'une quelconque des revendications 1-7 pour la réduction des oxydes d'azote.

**10.** Utilisation d'un catalyseur préparé selon l'une quelconque des revendications 1-6 pour la réduction des oxydes d'azote, dans laquelle le catalyseur comprend un support mis en contact avec une solution d'un composé de titane ou de zirconium et d'un composé de vanadium.

**Patentansprüche**

**1.** Verfahren zur Herstellung eines mehrere Metalle enthaltenden Katalysators, umfassend die folgenden Stufen:

(a) In-Berührung-Bringen eines Trägers mit einer Imprägnierlösung, die eine Verbindung eines Metalles aus Gruppe 5b, 6b, 7b, 1b oder den unedlen Gruppe 8-Metallen des Periodensystems der Elemente, gelöst in einer wäßrigen, sauren Lösung einer Titan- oder Zirkonverbindung umfaßt; anschließend

(b) Trocknen des Trägers; und anschließend

(c) Ausführen einer Wärmebehandlung an dem Träger bei einer Temperatur von 200° C bis 800° C.

**2.** Verfahren nach Anspruch 1, worin der pH-Wert der eingesetzten sauren Lösung unter 5 liegt.

**3.** Verfahren nach Anspruch 1 oder 2, worin die eingesetzte Titanverbindung ein Titanhalogenid, ein organisches Titansalz oder Orthotitansäure ist.

**4.** Verfahren nach Anspruch 1 oder 2, worin die eingesetzte Zirkonverbindung ein Zirkonsalz oder Zirkonhydroxid ist.

**5.** Verfahren nach eine der Ansprüche 1 bis 4, worin die eingesetzte Imprägnierlösung zusätzlich eine weitere Verbindung eines Metalles aus Gruppe 5b, 6b, 7b, 1b oder den unedlen Gruppe 8-Metallen des Periodensystems der Elemente umfaßt.

**6.** Verfahren nach einem der Ansprüche 1 bis 5, worin der Stufe (a) ein In-Berührung-Bringen des Trägers mit einer Imprägnierlösung, die eine Verbindung eines Metalles aus Gruppe 5b, 6b, 7b, 1b oder den unedlen Gruppe 8-Metallen des Periodensystems der Elemente umfaßt, vorausgeht oder sich an diese Stufe anschließt.

**7.** Verfahren nach einem der Ansprüche 1 bis 6, welches ein zusätzliches Aufbringen einer Bromverbindung auf den in Stufe (c) erhaltenen behandelten Träger und ein Trocknen des Trägers umfaßt.

**8.** Verwendung eines nach einem der Ansprüche 1 bis 7 hergestellten Katalysators für Wasserstoffbe-

10

handlungsverfahren.

9. Verwendung eines nach einem der Ansprüche 1 bis 7 hergestellten Katalysators zur Reduktion von Stickstoffoxiden.

10. Verwendung eines nach einem der Ansprüche 1 bis 6 hergestellten Katalysators zur Reduktion von Stickstoffoxiden, worin der Katalysator einen Träger umfaßt, der mit einer Lösung einer Verbindung von Titan oder Zirkon und einer Verbindung von Vanadium in Berührung gebracht worden ist.